# EUROPEAN PATENT SPECIFICATION

(11) **EP 3 518 329 B1**
(45) Date of publication and mention of the grant of the patent: **28.06.2023**
(21) Application number: 16916440.7
(22) Date of filing: 21.09.2016
(51) Int. Cl.: H01M 4/36, H01M 4/62, H01M 10/0525, H01M 4/131, H01M 4/136, H01M 4/525, H01M 4/58, H01M 4/505, H01M 10/052, H01M 4/02

(54) **SECONDARY BATTERY AND CATHODE PLATE OF THESAME**
SEKUNDÄRBATTERIE UND KATHODENPLATTE DAVON
BATTERIE SECONDAIRE ET PLAQUE DE CATHODE DE CELLE-CI

(43) Date of publication of application: 31.07.2019
(73) Proprietor: Contemporary Amperex Technology Co., Limited, Ningde City, Fujian 352100 (CN)
(72) Inventor: LI, Zhen Hua, Ningde Fujian 352100 (CN); ZOU, Wu Yuan, Ningde Fujian 352100 (CN); JIN, Hai Zu, Ningde Fujian 352100 (CN)
(74) Representative: Gong, Jinping
(86) International application number: PCT/CN2016/099552
(87) International publication number: WO 2018/053699

(56) References cited:
- EP-A2- 2 500 965
- CN-A- 103 633 291
- CN-A- 104 300 123
- JP-A- 2008 293 875

## Description

### FIELD OF THE INVENTION

The present application generally relates to secondary batteries and, more particularly, to a secondary battery having high safety performance and a cathode plate thereof.

### BACKGROUND OF THE INVENTION

To improve the safety performance of a secondary battery, a conventional secondary battery generally adopts cathode slurry containing cathode material having high safety performance. However, in this case, only a high content of cathode material having high safety performance can improve the safety performance of the secondary battery remarkably. The energy density of the secondary battery will be reduced significantly and the internal resistance of the secondary battery in a low state of charge will increase remarkably. For electric vehicles with large capacity, the safety performance of the secondary battery cannot be improved remarkably.

In view of the foregoing, what is needed therefore, is to provide a cathode plate of a secondary battery to overcome the shortcomings in the prior art.

### SUMMARY OF THE INVENTION

One object of the present application is to provide a second battery having high safety performance and a cathode plate thereof.

According to the invention, a cathode plate of a secondary battery according to appended claim 1 is provided

According to one aspect of the present application, the specific surface area of the cathode active material in the primer layer is 0.5-50m²/g.

According to one aspect of the present application, the primer layer has a single side thickness of 1-25/µm.

According to one aspect of the present application, the cathode plate has a total single side thickness of 30-100µm, and the total single side thickness includes a single side thickness of the primer layer and a single side thickness of the ternary active material layer.

According to one aspect of the present application, the single side thickness of the primer layer is 1%-83% of a total single side thickness of the cathode plate. The thickness of the primer layer can be adjusted according to different thermal stability of the cathode active material in the ternary active material layer. The worse the thermal stability of the cathode active material in the ternary active material layer is, the thicker the primer layer is.

According to one aspect of the present application, the mass content of the cathode active material in the primer layer is 10% to 75%, the mass content of the conductive agent in the primer layer is 5% to 30%, and the mass content of the binder in the primer layer is 20% to 70%.

According to one aspect of the present application, the specific surface area of the cathode active material in the primer layer is no more than 100 times of the specific surface area of the ternary cathode active material in the ternary active material layer.

According to the invention, the cathode active material in the primer layer is selected from a group consisting of phosphate cathode material (LiMPO₄ or doped and/or coated product thereof, wherein M is at least one of Mn, Fe, Co, Ni), silicate cathode material (Li₂MSiO₄ or doped and/or coated product thereof, wherein M is at least one of Mn, Fe, Co, Ni) and spinel material (lithium manganese oxide, lithium titanate, LiMₓMn₂₋ₓO₄, wherein M is Cr, Co, Ni and Cu. The primer layer is configured to improve the safety performance of the secondary battery.

According to one aspect of the present application, the binder in the primer layer is selected from a group consisting of polyolefin, polyfluoroolefin, polyacrylate, polycarbonate, polyethylene oxide, rubber and polyurethane.

According to one aspect of the present application, the conductive agent in the primer layer is selected from a group consisting of metal, alloy and carbon material.

According to the invention, the ternary cathode active material in the ternary active material layer has a formula of LiNi_{1-x-y}CoₓM_{y}O₂, wherein 0.1 ≤ y ≤ 0.3, 0 ≤ x ≤ 0.25, M is at least one of Mn, Mg, Al, Ti, Sr, Ba.

According to one embodiment of the present application, a secondary battery is provided. The secondary battery includes a cathode plate, an anode plate, a separator between the cathode plate and the anode plate, and electrolyte, wherein the cathode plate is the cathode plate according to the present application.

Compared with common technology, the secondary battery according to the present application includes a primer layer between the cathode current collector and the ternary active material layer. The specific surface area of the cathode active material in the primer layer is no less than 1.2 times of the specific surface area of the ternary cathode active material in the ternary active material layer, which can increase the contact area between the primer layer and the ternary active material layer, thereby reducing the interface contact resistance, improving the cycle performance of the secondary battery, and reducing the increase of internal resistance during use of the secondary battery.

### BRIEF DESCRIPTION OF THE DRAWINGS

Other advantages and novel features will be drawn from the following detailed description of preferred embodiments with the attached drawings. The accompanying drawings, which are incorporated in and constitute a part of this specification, illustrate embodiments of the present invention and, together with a general description of the invention given above, and the detailed description of the embodiments given below, serve to explain the principles of the invention, in which:

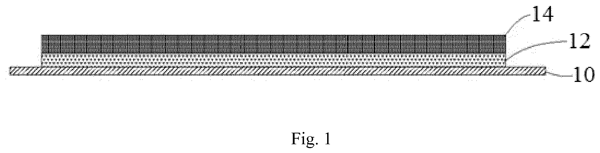

Fig. 1 depicts an exemplary cross-section view of a cathode plate of a secondary battery according to one embodiment of the present application.

### DETAILED DESCRIPTION OF THE INVENTION

Example embodiments of the present invention will now be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like reference numerals refer to like elements throughout.

Referring to Fig. 1, a cathode plate of a secondary battery according to one embodiment of the present application includes a cathode current collector 10, a primer layer 12 provided on the cathode current collector 10, and a ternary active material layer 14 disposed on the primer layer 12. According to one embodiment of the present application, the cathode current collector 10 is preferably made from aluminum foil. The primer layer 12 includes a cathode active material, a conductive agent and a binder. A specific surface area of the primer cathode active material in the primer layer is 0.5-50m²/g, which is no less than 1.2 times of a specific surface area of the ternary cathode active material in the ternary active material layer.

It should be understood that, in the embodiment as illustrated in Fig. 1, only one surface of the cathode current collector 10 is provided with a primer layer 12 and a ternary active material layer 14. However, in actual use, two surfaces of the cathode current collector 10 may each be provided with a primer layer 12 and a ternary active material layer 14.

The present application will now be described in more detail in view of the examples of the present application as following.

### Example 1

Preparation of the cathode plate of the secondary battery: 1) dissolving polyvinylidene fluoride (PVDF), carbon coated lithium iron phosphate (LFP@C having a specific area of 15m²/g, conductive agent carbon black (Super P) at a mass ratio of 20:60:20 in solvent NMP; adjusting the amount added of the solvent, to obtain a primer slurry having a viscosity of 100-20000mPa.s; coating the primer slurry on the cathode current collector via a coating machine or a spraying machine, to form a primer layer, wherein the specific area of the carbon coated lithium iron phosphate is 15m²/g; 2) coating ternary active material on the primer layer to form a ternary active material layer: dissolving ternary active material NCM523 (specific surface area of 1.2m²/g), SP and PVDF in solvent NMP and stirring, to obtain a ternary slurry contains 90wt% ternary active material NCM523, 5wt%SP and 5wt%PVDF; coating the ternary slurry on the primer layer, to obtain the ternary active material layer, wherein the specific surface area of the ternary active material is 1.2 m²/g; drying the cathode current collector coated with the primer slurry and the ternary slurry at 85°C and cold pressing the current collector; and further drying the cathode current collector at 85°C in vacuum for 4 hours after rimming, cutting and slitting the cathode current collector; soldering tabs to the cathode current collector and obtaining the cathode plate of the secondary battery, wherein the thickness of the primer layer is 15µm and the thickness of the ternary active material layer is 70µm.

Preparation of the anode plate of secondary battery: 1) dissolving active material graphite, conductive agent Super-P, thickener CMC and binder SBR at a mass ratio of 96.5:1.0:1.0:1.5 in solvent deionized water and stirring, to obtain an anode slurry; 2) coating the anode slurry on copper foil current collector and drying the anode current collector at 85°C; drying the anode current collector at 110°C in vacuum for 4 hours after rimming, cutting and slitting the anode current collector; Soldering tabs to the anode current collector and obtaining the anode plate of the secondary battery.

Preparation of the electrolyte of the secondary battery: adopting the mixture of ethylene carbonate (EC), propylene carbonate (PC) and diethyl carbonate (DEC) as the non-aqueous organic solvent, wherein the mass ratio of EC:PC:DEC is 30:30:40; adopting lithium hexafluorophosphate as the lithium salt, to obtain a 1M electrolyte.

Preparation of the secondary battery: adopting polypropylene film having a thickness of 12µm as the separator; coiling the cathode plate, the anode plate, and the separator between the cathode plate and anode plate, to obtain a battery cell having a thickness of 8mm, a width of 60mm and a length of 30mm; packaging the battery cell in a aluminum foil package and drying the package in vacuum at 75°C for 10 hours; after injecting electrolyte, vacuum packaging and positioning for 24 hours, obtaining a packaged battery cell; charging the packaged battery cell to 4.2V at a constant current of 0.1C (160mA); charging the packaged battery cell to a current of 0.05C (80mA) at a constant voltage of 4.2V; charging the packaged battery cell to 3.0V at a constant current of 0.1C (160mA); repeating the charging and discharging for two times; charging the packaged battery cell to 3.8V at a constant current of 0.1C (160mA), and finally obtaining the secondary battery of the present application.

### Examples 2-8 and comparative examples 1-4

Examples 2-8 and comparative examples 1-4 are almost the same as Example 1 except the preparation of the cathode plate of the secondary battery. The materials of the cathode plate of the secondary battery of examples and comparative examples and the parameters are shown in Table 1.

**Table 1 Materials and parameters for preparation of the cathode plate according to examples and comparative examples**

| | Primer layer | | | Ternary active material layer | | |
|---|---|---|---|---|---|---|
| | Cathode active material: Conductive agent: Binder | Thickness of the coating | Specific surface area | Conductive agent: Cathode active material: Binder | Thickness of the coating | Specific surface area |
| Example 1 | 60% C-LFP: 20%SP: 20% PVDF | 15µm | 15m²/g | 5%SP: 90%NCM523: 5%PVDF | 70µm | 1.2m²/g |
| Example 2 | 60% C-LFP: 25%SP: 15% PVDF | 15µm | 15m²/g | 5%SP: 90%NCM523: 5%PVDF | 70µm | 0.9m²/g |
| Example 3 | 60% C-LFP: 25%VGCF: 15%LA133 (acrylonitrile-based multicomponent copolymer) | 15µm | 15m²/g | 5%SP: 90%NCM523: 5%PVDF | 70µm | 0.6m²/g |
| Example 4 | 60% C-LFP: 20%SP: 20%LA133 | 15µm | 15m²/g | 5%SP: 90%NCM523: 5%PVDF | 70µm | 1.0m²/g |
| Example 5 | 60% C-LFP: 20%SP: 20% polyacrylate | 15µm | 15m²/g | 5%SP: 90%NCM811: 5%PVDF | 70µm | 0.6m²/g |
| Example 6 | 60% LiFe0.5Mn0.5PO4@C: 20%SP: 20% PVDF | 15µm | 15m²/g | 5%SP: 90%NCM622: 5%PVDF | 70µm | 1.2m²/g |
| Example 7 | 60% C-LFP: 20%VGCF: 20% PVDF | 15µm | 15m²/g | 5%SP: 90%NCM523: 5%PVDF | 70µm | 1.2 m²/g |
| Example 8 | 60%C-LFP: 20%VGCF: 20%PVDF | 25µm | 50m²/g | 5%SP: 90%NLiNi0.8C o0.15 A10.05) : 5%PVDF | 70µm | 1.0m²/g |
| Comparative example 1 | 0:0:0 | 0 | -- | 5%SP: 90%NCM523: 5%PVDF | 70µm | 2.0m²/g |
| Comparative example 2 | 0: 40%SP: 60%PVDF | 0µm | -- | 5%SP: 90%NCM523: 5%PVDF | 70µm | 2.0m²/g |
| Comparative example 3 | 60% C-LFP: 20%SP: 20% PVDF | 15µm | 15m²/g | 5%SP: 90%NCM523: 5%PVDF | 70µm | 15m²/g |
| Comparative example 4 | 60%C-LFP: 20%SP: 20%PVDF | 15µm | 15m²/g | 5%SP: 90%NCM523: 5%PVDF | 70µm | 40m²/g |

### Performance test of the secondary battery and the cathode plate thereof

The secondary batteries of examples and comparative examples are tested according to GBT31485-2015 "Safety requirements and test methods for power batteries of electric vehicles" to assess the safety performance of the secondary battery. The test results are shown in Table 2.

### 1. Nailing test

Charging the secondary battery at 1C to charge cutoff voltage and charging the secondary battery at a constant voltage to a current of 0.05C and stop charging. Piercing through the secondary battery with a high temperature resistant steel needle having a diameter of 5-10mm, at a speed of 25mm/s, along a direction perpendicular to the battery plate, and the through position is close to the geometric center of the surface where the needle piercing. Setting the needle in the secondary battery and observing whether is there ignition or explosion of the secondary battery.

### 2. Overcharge test

Charging the secondary battery at 1C to the charge cutoff voltage, charging the secondary battery at a constant voltage to a current of 0.05C and stop charging, and charging the secondary battery at a constant current of 1C to 1.5 times of the charge termination voltage, or stopping charging after 1 hour.

### 3. Cycle performance test

A 1C/1C cycle performance test is carried out at 25°C within a voltage of 2.8V-4.2V. The test circle performance is stopped when the capacity attenuate to 80% of the first discharge specific capacity.

**Table 2 Test results of the secondary batteries of examples and comparative examples**

| | Nailing test | Overcharge | Cycle number |
|---|---|---|---|
| Example 1 | 5/5 pass | 5/5 pass | 3400 |
| Example 2 | 5/5 pass | 5/5 pass | 3350 |
| Example 3 | 5/5 pass | 5/5 pass | 3600 |
| Example 4 | 5/5 pass | 5/5 pass | 3500 |
| Example 5 | 5/5 pass | 5/5 pass | 3450 |
| Example 6 | 5/5 pass | 5/5 pass | 3550 |
| Example 7 | 5/5 pass | 5/5 pass | 3280 |
| Example 8 | 5/5 pass | 5/5 pass | 3250 |
| Comparative example 1 | 5/5 do not pass | 5/5 do not pass | 2800 |
| Comparative example 2 | 4/5 do not pass | 5/5 do not pass | 2500 |
| Comparative example 3 | 5/5 pass | 5/5 pass | 2650 |
| Comparative example 4 | 5/5 pass | 5/5 pass | 2580 |

It can be clearly seen from Table 2 that:
1. Examples 1-8 each includes a primer layer and, therefore, can pass the nailing test and the overcharge test. Comparative example 1 cannot pass the nailing test and the overcharge test. Comparative example 2 can hardly pass the nailing test and cannot pass the overcharge test. This is because the specific surface area of the cathode active material in the primer layer is no less than 1.2 times of the specific surface area of the ternary cathode active material in the ternary active material layer, which increases the contact area between the primer layer and the ternary active material layer, thereby reducing interface contact impedance, improving the cycle performance of the secondary battery.
2. Examples 3-5 adopt aqueous binders and, therefore, have better cycle performance than that of comparative example 1, and also have slightly better cycle performance than that of the example adopting oily binder.
3. Example 6 adopts LiFe_{0.5}Mn_{0.5}PO₄@C having higher voltage platform and thus has better cycle performance than that of the secondary battery adopting C-LFP.
4. Compared with example 1, instead of SP, example 7 adopts VGCF. The cycle performance of example 7 is poor possibly due to the fibrous structure of VGCF.
5. The specific surface area of the cathode active material in the primer layer of comparative example 3-4 are less than 1.2 times of the specific surface area of the ternary active material in ternary active material layer. Therefore, the cycle performances of comparative example 3-4 are slightly worse than those of the examples 1-8.

Compared with the common technology, the secondary battery of the present application is provided with a primer layer between a cathode current collector and a ternary active material layer, and the specific surface area of the cathode active material in the primer layer is no less than 1.2 times of the specific surface area of the ternary cathode active material in the ternary active material layer, which increases the contact area between the primer layer and the ternary active material layer, thereby reducing interface contact impedance, improving cycle performance of the secondary battery, and reducing the increase of internal resistance during use of the secondary battery.

In addition, the cathode active material having high stability in the primer layer can form a heat insulation layer between the aluminum foil having excellent thermal conductivity and the ternary active material having poor thermal stability. The heat insulation layer can reduce oxygen release of the ternary active material at high temperature, and thus reduce thermal runaway. At the same time, the cathode active material added can improve the stability of the primer layer, so that the primer layer cannot be dissolved by NMP in the ternary active material slurry, thereby improving pass probability in the nailing test.

## Claims

1. A cathode plate of a secondary battery, comprising:
a cathode current collector;
a primer layer comprising a cathode active material, a conductive agent and a binder disposed on the cathode current collector, the cathode active material in the primer layer is selected from a group consisting of phosphate cathode material, silicate cathode material and spinel material; and
an active material layer comprising a ternary cathode active material disposed on the primer layer, the ternary cathode active material has a formula of LiNi_{1-x-y}CoₓM_{y}O₂, wherein 0.1≤y≤0.3, 0≤x≤0.25, M is at least one of Mn, Mg, Al, Ti, Sr, Ba;
wherein a specific surface area of the cathode active material in the primer layer is no less than 1.2 times of a specific surface area of the ternary cathode active material in the ternary active material layer.

2. The cathode plate of claim 1, wherein the specific surface area of the cathode active material in the primer layer is 0.5-50m²/g.

3. The cathode plate of claim 1, wherein the primer layer has a single side thickness of 1-25µm.

4. The cathode plate of claim 3, wherein the cathode plate has a total single side thickness of 30-100µm, and the total single side thickness comprises a single side thickness of the primer layer and a single side thickness of the active material layer.

5. The cathode plate of claim 4, wherein the single side thickness of the primer layer is 1%-83% of a total single side thickness of the cathode plate.

6. The cathode plate of claim 1, wherein the binder in the primer layer is selected from a group consisting of polyolefin, polyfluoroolefin, polyacrylate, polycarbonate, polyethylene oxide, rubber and polyurethane.

7. The cathode plate of claim 1, wherein the conductive agent in the primer layer is selected from a group consisting of metal, alloy and carbon material.

8. A secondary battery comprising a cathode plate, an anode plate, a separator between the cathode plate and the anode plate, and electrolyte, wherein the cathode plate is the cathode plate of any one of claims 1 to 7.

## Patentansprüche

1. Kathodenplatte einer Sekundärbatterie, umfassend:
einen Kathodenstromkollektor;
eine Grundierungsschicht, die ein Kathodenaktivmaterial, ein Leitmittel und ein Bindemittel umfasst und auf dem Kathodenstromkollektor angeordnet ist, wobei das Kathodenaktivmaterial in der Grundierungsschicht aus der Gruppe bestehend aus Phosphat-Kathodenmaterial, Silicat-Kathodenmaterial und Spinell-Material ausgewählt ist; und
eine Aktivmaterialschicht, die ein ternäres Kathodenaktivmaterial umfasst und auf der Grundierungsschicht angeordnet ist, wobei das ternäre Kathodenaktivmaterial die Formel LiNi_{1-x-y}CoₓM_{y}O₂ aufweist, wobei 0,1≤y≤0,3, 0≤x≤0,25 und M für mindestens eines von Mn, Mg, Al, Ti, Sr, Ba steht;
wobei die spezifische Oberfläche des Kathodenaktivmaterials in der Grundierungsschicht nicht weniger als das 1,2-fache der spezifischen Oberfläche des ternären Kathodenaktivmaterials in der ternäres Aktivmaterial enthaltenden Schicht beträgt.

2. Kathodenplatte nach Anspruch 1, wobei die spezifische Oberfläche des Kathodenaktivmaterials in der Grundierungsschicht 0,5-50 m²/g beträgt.

3. Kathodenplatte nach Anspruch 1, wobei die Grundierungsschicht eine einseitige Dicke von 1-25 µm aufweist.

4. Kathodenplatte nach Anspruch 3, wobei die Kathodenplatte eine gesamte einseitige Dicke von 30-100 µm aufweist und die gesamte einseitige Dicke eine einseitige Dicke der Grundierungsschicht und eine einseitige Dicke der Aktivmaterialschicht umfasst.

5. Kathodenplatte nach Anspruch 4, wobei die einseitige Dicke der Grundierungsschicht 1 %-83 % der gesamten einseitigen Dicke der Kathodenplatte beträgt.

6. Kathodenplatte nach Anspruch 1, wobei das Bindemittel in der Grundierungsschicht aus der Gruppe bestehend aus Polyolefin, Polyfluorolefin, Polyacrylat, Polycarbonat, Polyethylenoxid, Kautschuk und Polyurethan ausgewählt ist.

7. Kathodenplatte nach Anspruch 1, wobei das Leitmittel in der Grundierungsschicht aus der Gruppe bestehend aus Metall-, Legierungs- und Kohlenstoffmaterial ausgewählt ist.

8. Sekundärbatterie, umfassend eine Kathodenplatte, eine Anodenplatte, einen Separator zwischen der Kathodenplatte und der Anodenplatte und Elektrolyt, wobei es sich bei der Kathodenplatte um die Kathodenplatte nach einem der Ansprüche 1 bis 7 handelt.

## Revendications

1. Plaque de cathode d'une batterie secondaire, comprenant :
un collecteur de courant de cathode ;
une couche d'apprêt comprenant un matériau actif de cathode, un agent conducteur et un liant disposée sur le collecteur de courant de cathode, le matériau actif de cathode dans la couche d'apprêt étant choisi dans un groupe constitué par un matériau de cathode de phosphate, un matériau de cathode de silicate et un matériau de spinelle ; et
une couche de matériau actif comprenant un matériau actif de cathode ternaire disposée sur la couche d'apprêt, le matériau actif de cathode ternaire possédant une formule de LiNi_{1-x-y}CoₓM_{y}O₂, dans laquelle 0,1 ≤ y ≤ 0,3, 0 ≤ x ≤ 0,25, M est au moins l'un parmi Mn, Mg, Al, Ti, Sr, Ba ;
une aire de surface spécifique du matériau actif de cathode dans la couche d'apprêt étant non inférieure à 1,2 fois d'une aire de surface spécifique du matériau actif de cathode ternaire dans la couche de matériau actif ternaire.

2. Plaque de cathode selon la revendication 1, l'aire de surface spécifique du matériau actif de cathode dans la couche d'apprêt étant de 0,5 à 50 m²/g.

3. Plaque de cathode selon la revendication 1, la couche d'apprêt possédant une épaisseur de côté unique de 1 à 25 µm.

4. Plaque de cathode selon la revendication 3, la plaque de cathode possédant une épaisseur de côté unique totale de 30 à 100 µm, et l'épaisseur de côté unique totale comprenant une épaisseur de côté unique de la couche d'apprêt et une épaisseur de côté unique de la couche de matériau actif.

5. Plaque de cathode selon la revendication 4, l'épaisseur de côté unique de la couche d'apprêt étant 1 % à 83 % d'une épaisseur de côté unique totale de la plaque de cathode.

6. Plaque de cathode selon la revendication 1, le liant dans la couche d'apprêt étant choisi dans un groupe constitué par une polyoléfine, une polyfluorooléfine, un polyacrylate, un polycarbonate, un poly(oxyde d'éthylène), un caoutchouc et un polyuréthane.

7. Plaque de cathode selon la revendication 1, l'agent conducteur dans la couche d'apprêt étant choisi dans un groupe constitué par un matériau métallique, d'alliage et de carbone.

8. Batterie secondaire comprenant une plaque de cathode, une plaque d'anode, un séparateur entre la plaque de cathode et la plaque d'anode, et un électrolyte, la plaque de cathode étant la plaque cathode selon l'une quelconque des revendications 1 à 7.
